# EUROPÄISCHE PATENTSCHRIFT

(11) **EP 1 305 682 B1**
(45) Veröffentlichungstag und Bekanntmachung des Hinweises auf die Patenterteilung: **29.09.2004**
(21) Anmeldenummer: 01951435.5
(22) Anmeldetag: 27.06.2001
(51) Int. Cl.: G05D 16/00, F16K 25/02, B60T 15/00

(54) **VERFAHREN UND VORRICHTUNG ZUR STEUERUNG WENIGSTENS EINES VENTILS**
METHOD AND DEVICE FOR CONTROLLING AT LEAST ONE VALVE
PROCEDE ET DISPOSITIF POUR COMMANDER AU MOINS UNE SOUPAPE

(30) Priorität: 12.07.2000 DE 10033909
(43) Veröffentlichungstag der Anmeldung: 02.05.2003
(73) Patentinhaber: ROBERT BOSCH GMBH, 70442 Stuttgart (DE)
(72) Erfinder: WUERTH, Gebhard, 74429 Sulzbach-Laufen (DE); SCHANZENBACH, Matthias, 74246 Eberstadt (DE); BINDER, Juergen, 73760 Ostfildern (DE); JAHNZ, Timo, 70435 Stuttgart (DE); GOTTWICK, Ulrich, 70192 Stuttgart (DE); SCHUBERT, Michael, 75382 Althengstett (DE)
(86) Internationale Anmeldenummer: PCT/DE2001/002370
(87) Internationale Veröffentlichungsnummer: WO 2002/005048

(56) Entgegenhaltungen:
- US-A- 3 633 597
- US-A- 4 538 228
- US-A- 4 694 651

## Beschreibung

### Stand der Technik

Die Erfindung betrifft ein Verfahren, und eine Vorrichtung zur Steuerung wenigstens eines Ventils.

In modernen Steuersystemen werden vielfach elektrisch betätigbare Ventile eingesetzt, die als Stellelement zur Einstellung wenigstens einer Betriebsgröße und/oder einer Komponente dienen. Ein bevorzugtes Anwendungsgebiet derartiger Ventile ist die Steuerung von Radbremsen, wo mittels der dort eingesetzten Ventile der hydraulisch oder pneumatisch erzeugte Druck in den Radbremsen gesteuert wird. Problematisch hierbei ist, dass Verschmutzungen im Bereich eines Ventils auftreten können, die ein vollständiges Schließen dieses Ventils verhindern. Dadurch können Leckagen im System auftreten. Dies zeigt insbesondere bei der Steuerung von Radbremsen Nachteile, da der Bremsdruck in den Radbremsen nicht mehr vollständig gehalten werden kann und/oder der zur Bremsaktivierung notwendige Systemdruck nicht mehr oder nur noch unter höherem Aufwand bereitgestellt werden kann.

Aus der DE-A 196 54 427 sind elektrisch betätigbare Sitzventile bekannt, welche zur Steuerung des Bremsdrucks in wenigstens einer Radbremse nur teilweise geöffnet werden.

Insbesondere bei derartigen Ventilen, die nicht nur vollständig geschlossen oder vollständig geöffnet werden, sondern auch Zwischenpositionen einnehmen, können sich Verschmutzungen zwischen Anker und Ventilsitz einklemmen. Die in der Regel vorhandene Filterung des Druckmediums (z.B. Hydraulikflüssigkeit) kann aus Gründen des Strömungswiderstandes nicht beliebig fein ausgestaltet werden. In Folge dessen tritt auch bei solchen Ventilen die Problematik auf, dass eine Verschmutzung zu einer Leckage im nicht angesteuerten Ventilzustand führt oder ein vollständiges Schließen des Ventils im angesteuerten Zustand verhindert.

Bei der bekannten Lösung wird der Strom durch das Ventil mittels eines Stromreglers geregelt. Der Sollwert des Stromreglers wird von einem Bremsdruckregler beispielsweise mittels eines pulsweitenmodulierten Signals vorgegeben. Dabei wird der Ist-Bremsdruck auf den Soll-Bremsdruck eingeregelt. Aus komfort- und regelungstechnischen Gründen ist dabei die maximale Änderung des Stroms pro Zeit begrenzt.

Aus der DE-A 198 07 368 ist bekannt, dass bei einer elektrohydraulischen Bremsanlage anhand des Verhaltens des Speicherdrucks Fehlerzustände abgeleitet werden, die auch auf derartige Ventilverschmutzungen hindeuten.

In der DE-A 198 07 366 wird am Beispiel einer elektro-hydraulischen Bremsanlage eine Vorgehensweise beschrieben, mit deren Hilfe die den Bremsdruck in den Radbremsen steuernden Komponenten auf mögliche Fehlerzustände überwacht werden. Im Fehlerfall werden je nach Art des Fehlers Notbetriebe eingeleitet, z.B. ein sogenannter 3-Rad-Betrieb oder eine Abschaltung der Regelung, die zumindest zu einem unkomfortablen Bremsverhalten führen.

Aus der US 4 538 228 A1 ist ein Bremssystem mit Regelventilen bekannt, bei dem während einer Leckage Regelventile zur kurzzeitigen Öffnung und Schließung angesteuert werden.

Die Erfindung schägt vor ein Verfahren und eine Vorrichtung zur Steuerung wenigstens eines Ventils mit den in den Ausprüchen 1 und 10 genannten Merkmalen.

### Vorteile der Erfindung

Durch eine spezielle Ansteuerung des oder der Ventile zur Beseitigung der Verunreinigung wird die Verfügbarkeit des mit dem oder den Ventilen ausgestatteten Systems deutlich erhöht. Besonders vorteilhaft ist dies bei elektrisch gesteuerten Bremsanlagen, da in diesem Fall bei Beseitigung der Verschmutzung auf den in der Regel einschränkenden Notbetrieb verzichtet werden kann.

In besonders vorteilhafter Weise wird insbesondere eine systembedingte Schwäche von Regel- oder Schaltventilen beseitigt, welche in Mittelpositionen betrieben werden.

Vorteilhaft ist ferner, dass durch die Betätigung des oder der Ventile Verschmutzungspartikel beseitigt werden, die eine Größe aufweisen, die durch eine Filterung technisch nicht mehr sinnvoll erfasst werden können. Die Betätigung des oder der Ventile zur Reinigung zeigt daher besondere Vorteile als Ergänzung zur bekannten Filterung des Druckmediums.

Vorteilhaft ist sowohl die Anwendung bei Hydraulikventilen als auch bei Pneumatikventilen. Dabei sind die vorteilhaften Wirkungen nicht nur auf das Anwendungsgebiet der Radbremsen beschränkt, sondern erstrecken sich auf alle Anwendungen, insbesondere auch bei solchen hydraulischen oder pneumatischen Ventilen, die zur Steuerung andere Komponenten oder Größen diesen, z.B. auch im Bereich der Automatisierungstechnik.

In vorteilhafter Weise werden abhängig von der Druckdifferenz über dem Ventil zwei unterschiedliche Vorgehensweisen zur Beseitigung der Verschmutzung eingesetzt, so dass unter jeder Randbedingung eine optimale Beseitigung der Verschmutzung erreicht werden kann.

Darüber hinaus wird vorteilhafterweise die Durchführung der Verschmutzungsreinigung zu Diagnosezwecken und/oder zur Beeinflussung der Ventilsteuerung (z.B. Druckregelung) selbst ausgewertet.

Vorteilhaft ist ferner, dass bei erkannter Leckage in einem der Auslassventile (oder auch in einem Enlassventil) bei zu kleiner Druckdifferenz eine hohe Strömungsgeschwindigkeit im Bereich des oder der Ventile erzeugt wird, indem Einlass- und Auslassventile kurzzeitig geöffnet werden.

Weitere Vorteile ergeben sich aus der nachfolgenden Beschreibung von Ausführungsbeispielen bzw. aus den abhängigen Patentansprüchen.

### Zeichnung

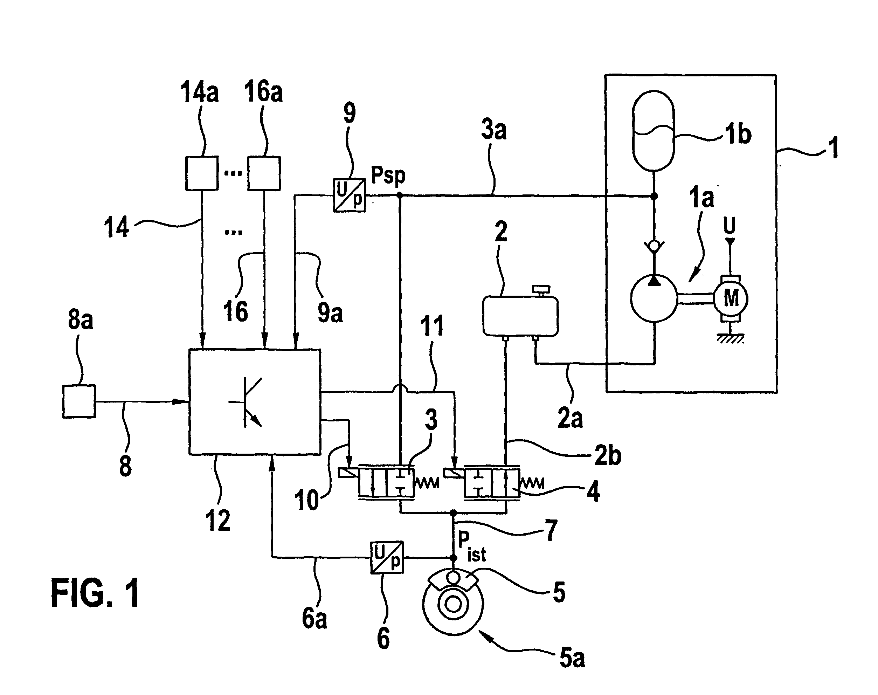

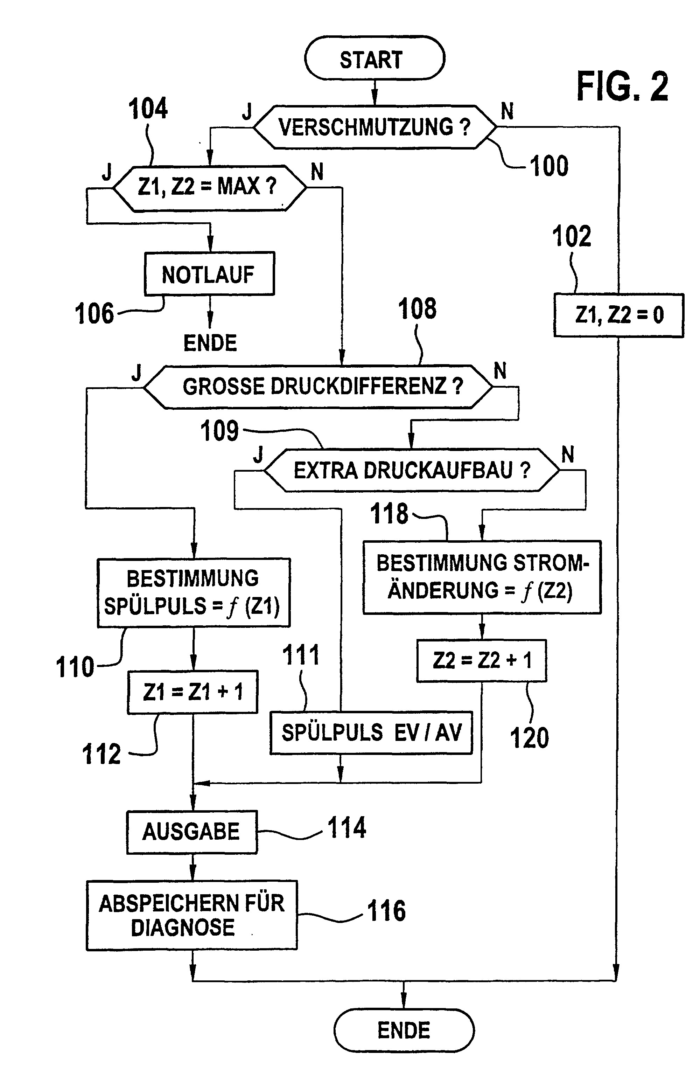

Die Erfindung wird nachstehend anhand der in der Zeichnung dargestellten Ausführungsformen näher erläutert. Dabei zeigt Figur 1 für ein bevorzugtes Ausführungsbeispiel am Beispiel einer Radbremse den Aufbau einer elektrisch gesteuerten Bremsanlage, während anhand des Flussdiagramms der Figur 2 die Vorgehensweise(n) zur Beseitigung einer möglichen Verschmutzung dargestellt ist (sind).

### Beschreibung von Ausführungsbeispielen

In Figur 1 ist am Beispiel einer einzelnen Radbremse ein Steuersystem für die Bremsanlage eines Fahrzeugs skizziert. Dieses umfaßt eine herkömmliche Druckversorgung 1, die beispielsweise aus einer Elektrohydraulikpumpe 1a und einem Gasdruckkolbenspeicher 1b bestehen kann. Ferner ist ein Flüssigkeitsreservoir 2 vorgesehen, welches die Druckversorgung 1 speist und die Flüssigkeit beim Druckabbau in der Radbremse aufnimmt. Zu diesem Zweck verbindet eine Leitung 2a das Reservoir 2 mit dem saugseitigen Eingang der Pumpe 1a, während eine zweite Leitung 2b vom Reservoir 2 zu den Ventilanordnungen zur Steuerung des Bremsdrucks in der Radbremse führt. Die Bremszange 5 des Rades 5a ist über eine Druckleitung 7 mit der Ventilanordnung zur Steuerung des Bremsdrucks in dem Radbremszylinder verbunden. Die Ventilanordnung besteht in einem bevorzugten Ausführungsbeispiel aus zwei Magnetsitzventilen 3 und 4 für Druckauf- und Druckabbau. Das Magnetsitzventil 3 (Einlassventil) für den Druckaufbau ist im bevorzugten Ausführungsbeispiel in der unbestromten Stellung geschlossen, das Ventil 4 (Auslassventil) für den Druckabbau ist stromlosen Zustand geöffnet. Über die Leitung 2b ist das Ventil 4 mit dem Flüssigkeitsreservoir 2 verbunden, während das Ventil 3 über eine Leitung 3a mit der Druckversorgung 1, dort mit der Förderleitung der Pumpe 1a, verbunden ist. Zur Erfassung des Bremsdrucks in der Bremszange 5 des Rades 5a ist ein Drucksensor 6 vorgesehen, der den Druck in der Leitung 7 bzw. den Druck im Radbremszylinder, erfasst. Ein solcher Druck stellt den Istdruck Pist dar, der Sensor schickt ein entsprechendes elektrisches Signal über die Leitung 6a zur Steuereinheit 12. Entsprechend wird durch einen Drucksensor 9 der Druck in der Bremsleitung 3a bzw. im Speicher 1b, der sogenannte Speicherdruck PSP, erfasst und ein entsprechendes elektrisches Signal über die Leitung 9a zum Steuergerät 12 geführt. Die Steuereinheit 12, die unter anderem einen Druckregler für den Radbremsdruck und für jedes Ventil einen Stromregler zur Einstellung des durch die Ventilwicklung fliessenden Stroms enthält, steuert über Ausgangsleitungen 10 und 11 die Magnetventile 3 und 4 zur Einstellung des Bremsdrucks in der Bremszange 5 an. Von einer Messeinrichtung 8a zur Erfassung des Fahrerbremswunsches, beispielsweise von einem mit dem Bremspedal verbundenen Weg-, Kraft- und/oder Drucksensor wird wenigstens ein der Bremspedalbetätigung entsprechendes elektrisches Signal über die Leitung B der Steuereinheit 12 zugeführt. Ferner werden der Steuereinheit 12 Eingangsleitungen 14 bis 16 von Messeinrichtungen 14a bis 16a zugeführt, die Betriebsgrößen des Kraftfahrzeugs erfassen, welche zur Bremsdruckregelung ausgewertet werden. Derartige Betriebsgrößen sind beispielsweise die Raddrehzahlen, Achslasten, Querbeschleunigung, etc. Diese Signale werden im Rahmen von herkömmlichen Antiblockierregelungen, Antriebsschlupfregelungen, Fahrdynamikregelungen, achslastabhängigen Regelungen verwendet. In einem bevorzugten Ausführungsbeispiel entsprechen die Ventile den Sitzventilen, die im eingangs genannten Stand der Technik beschrieben sind und die derart angesteuert werden, dass sie jede gewünschte Öffnung annehmen können.

Die Steuereinheit 12 erfasst über die Leitung 8 ein Maß für die Bremspedalbetätigung, die sie gegebenenfalls unter Berücksichtigung weiterer Betriebsgrößen, die über die Leitungen 14 bis 16 zugeführt werden, durch Auswerten von Kennlinien, Kennfeldern, Tabellen oder Berechnungsschritten in einem vom Fahrer gewünschten, unter den herrschenden Betriebsbedingungen einzustellenden Solldruck Pₛₒₗₗ umsetzt. Dieser Solldruck wird mit dem von der Messeinrichtung 6 erfassten Istdruck in der Radbremszange verglichen und abhängig von der Differenz im Rahmen der nachfolgend beschriebenen Druckregelung durch Ansteuern wenigstens eines der Magnetventile 3, 4 eingestellt. Ein derartiger Druckregelkreis ist für jede elektrisch steuerbare Radbremse des Fahrzeugs vorgesehen. Im bevorzugten Ausführungsbeispiel sind die von der Steuereinheit 12 über die Leitungen 10 und 11 ausgesandten Signale Stromsignale (Ausgangssignale von Stromreglern), die zu einer Kraftbeaufschlagung führen, die das Ventil in die erforderliche Zwischenstellung führt.

Im bevorzugten Ausführungsbeispiel nach Figur 1 ist die Magnetventilanordnung mit 2/2-Wegeventile ausgeführt, welche auch bei herkömmlichen ABS-Systemen Verwendung.finden. Darüber hinaus wird in anderen Ausführungsbeispielen ein Ventil mit zwei Sitzen, einem Anker und einem elektrischen Anschluss anstelle der beiden Ventile 3 und 4 eingesetzt. Ferner kann neben der direkten Erfassung des Bremsdrucks mittels des Drucksensors 6 in einem anderen Ausführungsbeispiel die Druckwirkung durch Erfassen der Bremskraft aus Verbiegungen an Elementen der Bremszange oder deren Befestigung abgeleitet werden.

Im bevorzugten Ausführungsbeispiel werden geregelte Stromtreiber eingesetzt, bei welchen im Rahmen eines Regelkreises der vom Druckregler ermittelte Strom als Sollwert mit einem an der Ventilanordnung erfassten Ist-Strom durch die Spule der Magnetventile verglichen und entsprechend eingeregelt wird. In anderen Ausführungen werden jedoch auch geschaltete Stromtreiber eingesetzt, die die Endstufen für die Ventile mit pulsweitenmodulierten Signalen ansteuern, so dass ein gewünschter mittlerer Erregerstrom entsprechend der Pulsweite in der Ventilwicklung entsteht.

Bei derartigen bedarfsgerecht angesteuerten Regelventilen, die beliebige Positionen zwischen der vollständig geschlossenen und der vollständig geöffneten Position einnehmen können, ist systembedingt die Gefahr vorhanden, dass eine Verschmutzung am jeweiligen Ventilsitz auftritt, die zu einer nicht einwandfreien Funktion des Ventils (z.B. Leckage beim Einlassventil) führt. Es hat sich gezeigt, dass derartige Verschmutzungen durch eine Filterung nicht beseitigt werden können, da infolge des zu großen Strömungswiderstandes eines feinen Filters insbesondere bei hydraulischen Bremsanlagen die Betriebseigenschaften der Bremsanlage deutlich verschlechtert werden. Besonders betroffen von derartigen Verschmutzungen sind stromlos geschlossene Ventile (z.B. die oben genannten Einlassventile), da diese weit seltener weit geöffnet werden als stromlos offene Ventile.

Die Steuereinheit überwacht ferner die korrekte Funktion der Steuerung, insbesondere der Ventile. Bei Verschmutzung weicht das Systemverhalten von dem definitionsgerechten Verhalten ab. Beispielsweise tritt eine Speicherdruckabnahme ohne Bremsvorgang auf, ein zu kleiner Speicherdruckgradient während des Speicherladens durch die Pumpe, eine zu lange Speicherladezeit, ein unerwünschter Druckanstieg in den Radbremsen, eine zu große Häufigkeit der Speichernachladung, eine Entladung des Speichers, wenn das Fahrzeug abgestellt ist, etc. Derartige Fehlerzustände, die auf eine solche Verschmutzung im Bereich des Ventils hinweisen können, werden von der Systemüberwachungssoftware erkannt. Ein Beispiel hierfür ist aus dem eingangs genannten Stand der Technik bekannt. Auf jeden Fall wird beispielsweise der messtechnisch erfasste Speicherdruck und/oder der Radbremsdruck oder die Radbremsdrücke mit vorgegebenen Grenzwerten in jeweiligen Betriebszustand (Bremsung, keine Bremsung, Speicherladevorgang) verglichen und daraus ein möglicher Fehlerzustand abgeleitet.

Zur Beseitigung einer möglichen Ventilsitzverschmutzung werden die Ventile (gleichzeitig oder auch nacheinander), bei lokalisiertem Fehler nur das vom Fehler betroffene Ventil, ausreichend weit oder vollständig geöffnet und unter großer Druckdifferenz gespült (durchblasen). Dabei wird das Ventil unabhängig von dem das Ventil steuernden Regelkreis angesteuert. Die Pulslänge (Strom-Sollwert oder Ventilansteuersignal), die Stärke der Ansteuerung (Größe des Stroms durch das Ventil) und/oder die Pulssequenz (zeitliches Aufeinanderfolgen der Soll-Strom-Pulse oder pulsweitenmodulierten Ansteuersignalen) ist frei wählbar und geeignet anzupassen. Wichtig ist, dass eine ausreichende Strömungsgeschwindigkeit an der Stelle der Verschmutzung vorhanden ist, die die Schmutzpartikel mitreißt. Es ist also eine ausreichend große Druckdifferenz am Ventilsitz notwendig. Bezüglich der Ansteuerung des Ventils wird mit Blick auf die möglicherweise entstehende Bremswirkung beim Spülen des Ventils die Länge und die Größe des Stromes, welcher durch das Ventil fließt, geeignet vorgegeben. Es hat sich gezeigt, dass Ströme, die das Ventil weit öffnen für 10 msec, günstige Ergebnisse in einem Ausführungsbeispiel erbracht haben.

Für den Fall, dass nur geringe Druckdifferenzen über dem Ventil anliegen, im Extremfall keine Druckdifferenz, wird alternativ zur obigen Vorgehensweise eine andere Vorgehensweise zur Entfernung der Verschmutzung eingesetzt. Die Ventilkugel wird dabei mit großer·Geschwindigkeit aus der geöffneten Position in den Sitz gefahren. Bei stromlos offenen Kugelsitzventilen erfolgt dies durch eine schnelle Bestromung, bei stromlos geschlossenen Ventilen durch schnelle Entstromung. Dabei wird der Vorgabewert für den Strom durch die Ventilwicklung oder das den mittleren Strom bewirkender Steuersignal schlagartig auf den Wert gesetzt, der zum Führen der Ventilkugel in ihren Sitz führt (bei stromlos offenen Ventilen ein vorgegebener Stromwert, bei stromlos geschlossenen Ventilen der Wert Null). Dabei ist zu beachten, das im normalen Betrieb die Änderungsgeschwindigkeit des Stromes aus Komfortgründen begrenzt ist. Durch das Schlagen der Ventile wird eine große Strömungsgeschwindigkeit im Bereich des Ventilsitzes erzeugt, durch welche die Schmutzpartikel erfasst und mitgerissen werden. Außerdem werden Schmutzpartikel wie Aluverbindungen, Metallpartikel, Gummipartikel, etc. durch das Schlagen der Ventile zertrümmert oder aus dem Ventil herausgedrückt.

Nach Beendigung der Ventilbetätigung im Rahmen der ersten Vorgehensweise (im folgenden Spülpuls genannt) oder der zweiten Vorgehensweise (im folgenden Ventilschlagen genannt) wird in einem bevorzugten Ausführungsbeispiel der Erfolg dieser Maßnahme durch die oben skizzierte Systemüberwachung überprüft. Ergibt diese Überprüfung, dass keine Fehlerzustand mehr vorliegt, kann vom Erfolg ausgegangen werden. Ist das Gegenteil der Fall, wird im bevorzugten Ausführungsbeispiel der Spülpuls bzw. das Ventilschlagen wiederholt. In der Praxis erfolgen solche Wiederholungen für eine vorgegebene Anzahl von Versuchen. Hat sich dann keine Besserung des Fehlverhaltens ergeben, so wird davon ausgegangen, dass der Fehlerzustand nicht durch eine der oben genannten Massnahmen beendet werden kann. Es wird dann'ein Notlaufbetrieb eingeleitet, bei einer elektrisch gesteuerten Bremsauflage auf eine hydraulische und/oder pneumatische Bremsbetätigung umgeschaltet.

Insbesondere beim Spülpuls, aber auch bei Anwendung der Methode des Ventilschlagens kann durch die Ventilöffnung Druck in den Radbremszangen aufgebaut werden und dadurch eine an sich unerwünschte Rückwirkung auf den Fahrer erzeugt werden. Um den Spülpuls und das Ventilschlagen möglichst rückwirkungsfrei auf das Fahrzeugverhalten durchzuführen, wird die Stärke und/oder Länge der Betätigung des Ventils entsprechend angepasst. Die Stärke und/oder Länge ist dabei derart vorzugeben, dass eine geeignete Spülung des Ventils erfolgt. Die dabei durch das Ventil fließende Volumenmenge muß so klein sein, dass keine nennenswerte Bremswirkung entsteht. Beim Spülpuls wird daher in der Regel eine Stromstärke unterhalb der maximal möglichen Stromstärke vorgegeben. Wird durch ein einmaliges oder mehrmaliges Spülen des Ventils der erkannte, möglicherweise auf Verschmutzung beruhende Fehlerzustand nicht beseitigt werden, so wird in weiteren Versuchen in einem Ausführungsbeispiel eine Erhöhung der Stromstärke und/oder der Länge des Spülpulses vorgenommen, bevor ein Notfahrbetrieb eingeleitet wird. Beim Ventilschlagen gilt Entsprechendes, wobei hier die Änderungsgeschwindigkeit des Stromes eine variierbare Größe ist.

Die Tatsache, dass ein Spülpuls oder ein Ventilschlagen durchgeführt worden ist, wird zur Diagnose abgespeichert. Aus diese Weise kann die geringe Rückwirkung auf das Fahrverhalten und/oder das Fahrgeräusch dokumentiert werden und/oder dem Servicepersonal Hinweise auf ein Wechseln oder Filtern der Bremsflüssigkeit gegeben werden. Desweiteren wird die Ausgabe des Spülpulses oder des Ventilschlagens dazu verwendet, auch in der Zeit der Fehlfunktion den Betrieb des Systems kontrolliert zu regeln. Der Druckregler wird also bei vorhandenem Fehlzustand (z.B. Leckage) durch vermehrten Raddruckaufbau und -abbau oder durch vermehrte Ansteuerung der Ladepumpe des Akkumulators derart gesteuert, dass dem Fehlzustand entgegengewirkt wird.

Der Druckregler selbst ist während der Ausgabe des Spülpulses oder der Signals zum Ventilschlagen wirkungslos.

Neben der Anwendung der geschilderten Methoden bei Einlassventilen wird sie auch mit den entsprechenden Vorteilen bei Auslassventilen eingesetzt. Die geschilderten Methoden sind ferner nicht auf die Regelventile begrenzt, sondern werden auch bei allen anderen Schaltventilen in einem Bremssystem oder allgemein bei allen Ventilen in einer Hydraulik- oder Pneumatikanordnung, auch z.B. im Automatisierungsbereich, angewendet.

Im bevorzugten Ausführungsbeispiel wird die beschriebene Vorgehensweise im Rahmen eines Programms einer Rechnereinheit der Steuereinheit zur Steuerung des wenigstens einen Ventils realisiert. In Figur 2 ist ein derartiges Programm als Flussdiagramm skizziert. Es wird während des Betriebs der Steuereinheit zu vorgegebenen Zeitpunkten durchlaufen.

Nach Start des in Figur 2 skizzierten Programmteils wird in einem ersten Schritt 100 überprüft, ob Hinweise für eine mögliche Verschmutzung wenigstens eines Ventils vorliegen. Dies ist dann der Fall, wenn auf der Basis der Systemüberwachung erkannt wurde, dass eine Leckage im Steuersystem vorliegt. Ist also beispielsweise anhand des Speicherdrucks erkannt worden, dass bei Nichtansteuerung der Pumpe der Speicherdruck nicht gehalten wird, so ist von einer Leckage in wenigstens einem Einlassventil auszugehen. Entsprechendes gilt, wenn anhand des Speicherdrucks ein zu kleiner Speicherdruckgradient während des Speicherladens durch die Pumpe erkannt wurde, eine zu lange Speicherladezeit bis zum Wunschwert des Speicherdruck, eine zu große Häufigkeit der Speichernachladung oder eine Entladung des Speichers, wenn das Fahrzeug abgestellt ist, festgestellt wurde. Eine Leckage im Einlassventil ist ferner auch dann zu vermuten, wenn auf der Basis des Bremsdrucksignals ein unerwünschter Druckanstieg (z.B. ohne Bremsung) in einer Radbremse erkannt wurde. Andererseits wird von einer Leckage im Bereich eines Auslassventiles auszugehen sein, wenn der Radbremsdruck nicht gehalten werden kann. Dies wird auf der Basis des Bremsdrucksignals abgeschätzt. Hat die Systemüberwachung keine Hinweise für eine derartige Verschmutzung von Ventilen ergeben, werden im Schritt 102 die Zähler Z1 und Z2 auf den Wert 0 gesetzt und das Programm beendet. Es wird dann zum nächsten Zeitintervall erneut durchlaufen.

Hat Schritt 100 ergeben, dass der Systemüberwachung Hinweise für eine Verschmutzung wenigstens eines Ventils vorliegen, wird im Schritt 104 überprüft, ob der Zähler Z1 oder der Zähler Z2 oder die Summe der beiden Zählerstände vorgegebene Maximalwerte erreicht haben. Ist dies der Fall, wird gemäß Schritt 106 ein Notlauf des Bremssystems eingeleitet und das Programm beendet.

Hat Schritt 104 ergeben, dass ein Maximalwert nicht erreicht ist, so wird im Schritt 108 überprüft, ob über dem Ventil eine große Druckdifferenz vorliegt. Dies wird beispielsweise durch Vergleich von Speicherdruck (eingangsseitig des Einlassventils) und Radbremsdruck (ausgangsseitig des Einlassventils) bzw. bei Auslassventilen auf der Basis des Radbremsdrucks (ausgangsseitig liegt dort Atmosphärendruck an) bestimmt. Ist die Größe der Druckdifferenz größer als ein applizierter Wert, so wird davon ausgegangen, dass die Strömungsgeschwindigkeit zum Losreißen der Verschmutzungspartikel ausreicht. Daher wird im Schritt 110 Stärke und Länge des Spülpulses bestimmt. Dies ist im bevorzugten Ausführungsbeispiel abhängig von der Häufigkeit der bisher durchgeführten Spülungen, d. h. vom Zählerstand Z1. Je größer dieser Zählerstand ist, desto länger und/oder stärker wird die Bestromung des Ventils. Im darauffolgenden Schritt 112 wird der Zählerstand Z1 um 1 erhöht und dann im Schritt 114 ausgegeben. Die Tatsache, dass ein derartiger Spülpuls ausgegeben wurde, wird gemäß Schritt 116 für Diagnosezwecke und/oder zur Korrektur des Druckreglers abgespeichert. Danach wird das Programm beendet und zum nächsten Zeitintervall erneut durchlaufen.

Hat Schritt 108 ergeben, dass keine ausreichend große Druckdifferenz vorliegt, so wird im Schritt 109 überprüft, ob ein extra Druckaufbau erzeugt werden kann. Dies ist beispielsweise dann der Fall, wenn an einem Auslassventil eine Leckage erkannt wurde (z.B. durch eine der im Stand der Technik oder oben beschriebenen Methoden). Die Methode wird auch angewendet, wenn ein Einlassventil eine Leckage zeigt und nur eine kleine Druckdifferenz auftritt. Ist dies der Fall, wird gemäß Schritt 111 Einlass- und Auslassventil (oder -ventile bei nicht zu lokalisierendem Fehler) derselben Radbremse(n) kurzfristig im Sinne des oben beschriebenen Spülpuls geöffnet. Durch diesen hydraulischen (oder pneumatischen) Kurzschluss wird eine hohe Strömungsgeschwindigkeit im Bereich des Auslassventils erzeugt, die die mögliche Verschmutzung löst. Die Länge der Öffnung kann in einer Ausführung abhängig von der Zahl der Spülungen oder Zahl der gemeinsamen Öffnung der Ventile sein.

Hat Schritt 109 ergeben, dass die Bedingungen für einen extra Druckaufbau nicht vorliegen, wird im Schritt 118 ein Ansteuersignal gebildet, durch welches die Ventilkugel auf den Ventilsitz geschlagen wird. Bei stromlos offenen Ventilen ist dies ein Puls mit einer sehr großen Stromänderung zu Beginn, wobei die Größe der Stromänderung und die Stärke des Stromes auch hier abhängig von der Häufigkeit der Durchführung des Ventilschlagens, d. h. vom Zählerstand Z2 sein kann. Bei einem stromlos geschlossenen Ventil wird im Schritt 118 ein Ansteuersignal bestimmt, welches zunächst das Ventil öffnet und dann plötzlich entstromt. Auch hier kann im bevorzugten Ausführungsbeispiel die Änderungsgeschwindigkeit des Stromes und die Höhe der vorherigen Bestromung abhängig vom Zählerstand Z2 sein. Im Schritt 120 wird der Zählerstand Z2 um 1 erhöht und dann im Schritt 114 das im Schritt 118 bestimmte Ansteuersignal ausgegeben.

In Abhängigkeit der Ergebnisse der Überwachung werden nur ein Ventil (z.B. bei einer Leckageerkennung auf der Basis des Radbremsdruck, bei unerwünschter Bremsdruckzunahme das zugeordnete Einlassventil, bei unerwünschter Abnahme das zugeordnete Auslassventil) oder alle Einlassventile oder Auslassventile zur Reinigung betätigt. Letzteres vor allem bei Leckageerkennung auf der Basis des Speicherdrucks, die keine nähere Fehlerlokalisierung erlaubt. Somit ist das in Figur 2 gezeigte Programm für jedes Ventil getrennt durchführbar.

Während der Ausgabe des Spülpulses bzw. des Ansteuersignals für das Ventilschlagen ist'der Druckregler deaktiviert.

Je nach Ausführungsbeispiel wird entweder nur der Spülpuls oder nur das Ventilschlagen oder beide in Kombination angewendet.

## Patentansprüche

1. Verfahren zur Steuerung wenigstens eines Ventils, wobei das Ventil mittels eines Ansteuersignals, welches den Strom durch die Ventilspule repräsentiert, betätigt wird, wobei ermittelt wird, ob im Steuersystem, welches das wenigstens eine Ventil umfasst, eine Leckage auftritt, die mit einem Fehlverhalten des Ventils in Zusammenhang stehen kann, **dadurch gekennzeichnet, dass** bei erkannter Leckage ein Ansteuersignal vorgegebener Länge und/oder Stärke und/oder Änderungsgeschwindigkeit zur Ansteuerung des Ventils ausgegeben wird,
- welches das wenigstens eine Ventil kurzzeitig öffnet und wieder schließt, wobei das Ansteuersignal zur kurzzeitigen Öffnung dann gebildet wird, wenn die Druckdifferenz über dem Ventil eine vorbestimmte Größe überschreitet, oder
- welches bei kleiner Druckdifferenz eine kurzzeitige Öffnung von Einlass- und Auslassventil erfolgt, oder
- welches die Ventilkugel mit großer Geschwindigkeit auf den Ventilsitz führt.

2. Verfahren nach Anspruch 1, **dadurch gekennzeichnet, dass** das wenigstens eine Ventil ein Sitzventil ist, welches durch das Ansteuersignal im Normalbetrieb in eine Position zwischen der vollständig geschlossenen und der vollständig geöffneten Position gebracht wird.

3. Verfahren nach einem der vorhergehenden Ansprüche, **dadurch gekennzeichnet, dass** zur kurzzeitigen Öffnung des wenigstens einen Ventils ein Ansteuersignal ermittelt wird, welches für eine vorbestimmte Zeit einen Strom vorbestimmter Größe dem Ventil zuführt.

4. Verfahren nach einem der vorhergehenden Ansprüche, **dadurch gekennzeichnet, dass** die Länge und/oder Stärke des Ansteuersignals abhängig von der Häufigkeit der Durchführung der kurzzeitigen Ansteuerung ist.

5. Verfahren nach einem der vorhergehenden Ansprüche, **dadurch gekennzeichnet, dass** die Ansteuerung des Ventils zu Diagnose- und/oder Regelzwecken abgespeichert wird.

6. Verfahren nach einem der vorhergehenden Ansprüche, **dadurch gekennzeichnet, dass** bei einer Druckdifferenz über dem Ventil, welche kleiner als der vorgegebene Wert ist, eine schnelle Bestromung und/oder Entstromung des Ventils stattfindet, so dass die Ventilkugel mit großer Geschwindigkeit in ihren Sitz gefahren wird.

7. Verfahren nach Anspruch 1 oder 6, **dadurch gekennzeichnet, dass** die Größe der Änderung des Stromes und/oder die Stärke des Stromes abhängig von der Häufigkeit der Durchführung der Ansteuerung ist.

8. Verfahren nach einem der vorhergehenden Ansprüche, **dadurch gekennzeichnet, dass** die Länge und/oder Stärke der kurzzeitigen Öffnung des Ventils bzw. der schnellen Ansteuerung des Ventils derart gewählt wird, dass möglichst wenig Rückwirkungen auf das Verhalten des Steuersystems auftreten.

9. Verfahren nach Anspruch 9, **dadurch gekennzeichnet, dass** dies bei erkannter Leckage in einem Auslassventil erfolgt.

10. Vorrichtung zur Steuerung wenigstens eines Ventils, mit einer Steuereinheit, welche wenigstens ein Rechnerelement umfasst, welches ein Ansteuersignal bildet, durch welches das wenigstens eine Ventil betätigt wird, das Rechnerelement Mittel umfasst, welche eine Leckage in dem das Ventil umfassende System erkennen, die mit einem Fehlverhalten des Ventils in Zusammenhang stehen kann, **dadurch gekennzeichnet, dass** die Rechnereinheit ferner Mittel aufweist, welche bei erkannter Leckage ein Ansteuersignal vorgegebener Länge und/oder Stärke und/oder Änderungsgeschwindigkeit zur Ansteuerung des Ventils ausgibt,
- welches das wenigstens eine Ventil kurzzeitig öffnet und wieder schließt, wobei das Ansteuersignal zur kurzzeitigen Öffnung dann gebildet wird, wenn die Druckdifferenz über dem Ventil eine vorbestimmte Größe überschreitet, oder
- welches bei kleiner Druckdifferenz eine kurzzeitige Öffnung von Einlass- und Auslassventil erfolgt, oder
- welches die Ventilkugel mit großer Geschwindigkeit auf den Ventilsitz führt.

## Claims

1. Method for controlling at least one valve, the valve being activated by means of an actuation signal which represents the current through the valve coil, it being determined whether a leak which may be related to incorrect behaviour of the valve occurs in the control system which comprises the at least one valve, **characterized in that**, when a leak is detected, an actuation signal of predefined length and/or strength and/or rate of change is output in order to actuate the valve,
- which signal briefly opens the at least one valve and closes it again, the actuation signal being formed in order to bring about brief opening when the pressure difference across the valve exceeds a predetermined magnitude, or
- which, when there is a small pressure difference, brings about brief opening of the inlet and outlet valve, or
- which moves the valve ball onto the valve seat at high speed.

2. Method according to Claim 1, **characterized in that** the at least one valve is a seat valve which is moved by the actuation signal during normal operation into a position between the completely closed position and the completely opened position.

3. Method according to one of the preceding claims, **characterized in that**, in order to open the at least one valve briefly, an actuation signal is determined which feeds a current of predetermined magnitude to the valve for a predetermined time.

4. Method according to one of the preceding claims, **characterized in that** the length and/or strength of the actuation signal is dependent on the frequency with which the brief actuation is carried out.

5. Method according to one of the preceding claims, **characterized in that** the actuation of the valve is stored for diagnostic and/or control purposes.

6. Method according to one of the preceding claims, **characterized in that**, when there is a pressure difference across the valve which is smaller than the predefined value, rapid energization and/or de-energization of the valve takes place so that the valve ball is moved to its seat at high speed.

7. Method according to Claim 1 or 6, **characterized in that** the magnitude of the change in the current and/or the strength of the current is dependent on the frequency with which the actuation is carried out.

8. Method according to one of the preceding claims, **characterized in that** the length and/or strength of the brief opening of the valve or of the rapid actuation of the valve is selected in such a way that as few effects as possible on the behaviour of the control system occur.

9. Method according to Claim 8, **characterized in that** this takes place when a leak is detected in an outlet valve.

10. Method for controlling at least one valve, having a control unit which comprises at least one computer element which forms an actuation signal by means of which the at least one valve is actuated, the computer element comprising means which detect a leak which may be related to incorrect behaviour of the valve, in the system comprising the valve, **characterized in that** the computer unit also has means which, when a leak is detected, outputs an actuation signal of predefined length and/or strength and/or rate of change in order to actuate the valve,
- which signal briefly opens the at least one valve and closes it again, the actuation signal being formed in order to bring about brief opening when the pressure difference across the valve exceeds a predetermined magnitude, or
- which, when there is a small pressure difference, brings about brief opening of the inlet and outlet valve, or
- which moves the valve ball onto the valve seat at high speed.

## Revendications

1. Procédé de commande d'au moins une soupape, la soupape étant actionnée au moyen d'un signal de commande qui représente le courant passant par la bobine de soupape, en vérifiant si dans le système de commande comprenant l'au moins une soupape une fuite se produit pouvant être due à un dysfonctionnement de la soupape,
**caractérisé en ce qu'**
en cas d'identification d'une fuite un signal de commande d'une longueur et/ou d'une ampleur et/ou d'une vitesse de variation prédéterminée est émis pour commander la soupape, signal qui
- ouvre pendant une courte durée puis referme l'au moins une soupape, le signal de commande pour l'ouverture de courte durée étant formé lorsque la différence de pression au-dessus de la soupape dépasse une grandeur prédéterminée, ou
- lors d'une faible différence de pression provoque une ouverture de courte durée de la soupape d'admission et de la soupape d'échappement, ou
- conduit la bille de soupape à grande vitesse sur le siège de soupape.

2. Procédé selon la revendication 1,
**caractérisé en ce que**
l'au moins une soupape est une soupape à siège, qui en fonctionnement normal est placée par le signal de commande dans une position située entre la position complètement fermée et la position complètement ouverte.

3. Procédé selon l'une quelconque des revendications précédentes,
**caractérisé en ce que**
pour l'ouverture de courte durée de l'au moins une soupape on détermine un signal de commande, qui pendant une durée prédéterminée alimente la soupape par un courant d'une grandeur prédéterminée.

4. Procédé selon l'une quelconque des revendications précédentes,
**caractérisé en ce que**
la longueur et/ou l'ampleur du signal de commande est fonction de la fréquence d'exécution de la commande de courte durée.

5. Procédé selon l'une quelconque des revendications précédentes,
**caractérisé en ce que**
la commande de la soupape est mémorisée pour des usages de diagnostic et/ou de régulation.

6. Procédé selon l'une quelconque des revendications précédentes,
**caractérisé en ce qu'**
en cas d'une différence de pression au-dessus de la soupape, qui est inférieure à la valeur prédéterminée, il se produit une mise sous tension et/ou hors tension rapide de la soupape permettant de faire entrer la bille de soupape à grande vitesse dans son siège.

7. Procédé selon la revendication 1 ou 6,
**caractérisé en ce que**
la grandeur de la variation du courant et/ou l'intensité du courant est fonction de la fréquence d'exécution de la commande.

8. Procédé selon l'une quelconque des revendications précédentes,
**caractérisé en ce que**
la longueur et/ou l'ampleur de l'ouverture de courte durée de la soupape ou de la commande rapide de la soupape est choisie de telle sorte qu'il se produit un minimum de rétroactions sur le comportement du système de commande.

9. Procédé selon la revendication 9,
**caractérisé en ce qu'**
il est mis en oeuvre lors d'une fuite identifiée dans une soupape d'échappement.

10. Dispositif de commande d'au moins une soupape, comprenant une unité de commande avec au moins un élément calculateur, qui forme un signal de commande par lequel l'au moins une soupape est actionnée, l'élément calculateur comprenant des moyens identifiant dans le système comprenant la soupape, une fuite qui peut être due à un dysfonctionnement de la soupape,
**caractérisé en ce que**
l'élément calculateur présente en outre des moyens qui lors d'une identification d'une fuite émettent un signal de commande d'une longueur et/ou d'une ampleur et/ou d'une vitesse de variation prédéterminée pour commander la soupape, signal qui
- ouvre pendant une courte durée puis referme l'au moins une soupape, le signal de commande pour l'ouverture de courte durée étant formé lorsque la différence de pression au-dessus de la soupape dépasse une grandeur prédéterminée, ou
- lors d'une faible différence de pression provoque une ouverture de courte durée de la soupape d'admission et de la soupape d'échappement, ou
- conduit la bille de soupape à grande vitesse sur le siège de soupape.
